# EUROPEAN PATENT APPLICATION

(11) **EP 4 273 738 A1**
(43) Date of publication of application: **08.11.2023**
(21) Application number: 23170928.8
(22) Date of filing: 02.05.2023
(51) Int. Cl.: G06F 40/30, G06F 40/211, G06F 40/268, G06F 40/284, G06F 40/289

(54) **SEMANTIC REPRESENTATION GENERATION METHOD, SEMANTIC REPRESENTATION GENERATION DEVICE, AND SEMANTIC REPRESENTATION GENERATION PROGRAM**

(30) Priority: 06.05.2022 JP 2022076454
(71) Applicant: SCREEN Holdings Co., Ltd., Kyoto 602-8585 (JP)
(72) Inventor: KASUBUCHI, Kiyotaka, Kyoto-shi, Kyoto 602-858 (JP); YOSHIDA, Akiko, Kyoto-shi, Kyoto 602-858 (JP); UMEHARA, Koki, Kyoto-shi, Kyoto 602-858 (JP); SUMIYA, Yuki, Kyoto-shi, Kyoto 602-8585 (JP)
(74) Representative: Goddar, Heinz J.

(57) **Abstract**

In a semantic representation generation method, syntax data is generated by a superficial analysis on text data described in a natural language. A concept tag (CT) is provided to each morpheme based on the syntax data with reference to a CT system table in which concept information hierarchically and ambiguously representing a meaning of the morpheme for a part of speech. Provided is a first semantic tag (ST) indicating semantic information representing a semantic relation between a first phrase/sequence of phrases and a second phrase/sequence of phrases to a first pair made up of the first phrase/sequence of phrases corresponding to a predicate and the second phrase/sequence of phrases having a modification relation with the predicate based on the syntax data. Semantic representation data is generated based on the concept tag provided to each morpheme and the first semantic tag provided to the first pair.

## Description

### BACKGROUND OF THE INVENTION

### Field of the Invention

The present invention relates to a method and a device for generating semantic representation data necessary for obtaining knowledge from text data such as a document described in a natural language.

### Description of the Background Art

Recently studied and developed is a method for obtaining knowledge from various types of text data (referred to as "natural language data" hereinafter) such as a document described in a natural language by a computer. Also studied and developed is a method for structuring and storing the knowledge obtained in such a manner to generate a knowledge base, and answering a question in the natural language based on the knowledge base upon receiving the question in a computer.

A meaning of a word included in a sentence needs to be hierarchically and ambiguously captured in a semantic analysis of natural language data by a computer to appropriately obtain the knowledge and answer the question using the natural language as with the case described above. In response to this, a concept of a specific representation included in natural language data has been conventionally defined hierarchically (for example, refer to Koichi Takeuchi, Alastair Butler, Iku Nagasaki, Takuya Okamura, Prashant Pardeshi, "Constructing Web-Accessible Semantic Role Labels and Frames for Japanese as Additions to the NPCMJ Parsed Corpus", Proceedings of the 12th Conference on Language Resources and Evaluation (LREC 2020), pp. 3153-3161, Marseille, 11-16 May 2020).

Performed is an analysis of a structure of a sentence from a viewpoint of a relationship between an argument as a complement necessary for a predicative to make sense and a predicative (referred to as "predicate-argument structure") while treating the predicative such as a verb or an adjective as a central meaning to capture the meaning of the sentence in a semantic interpretation on natural language data (for example, refer to Koichi Takeuchi, Masayuki Ueno, and Nao Takeuchi, "Annotating Semantic Role Information to Japanese Balanced Corpus", Proceedings of MAPLEX 2015, 2015).

In addition, Japanese Patent Application Laid-Open No. 2021-111303 and Japanese Patent Application Laid-Open No. 6-195383 relate to the present invention.

### SUMMARY

A meaning of a word or a meaning of a sentence in the natural language data cannot necessarily be represented appropriately in the semantic representation data obtained by the conventional semantic analysis by the computer as described above. As a result, a degree of accuracy for obtaining the knowledge from the natural language data is not sufficient, and reusability of the obtained knowledge is not sufficiently high.

Accordingly, it is desired to provide a method etc. of generating semantic representation data capable of representing a meaning of a word and a meaning of a sentence in natural language data more appropriately and sufficiently than ever before.

### [Means to solve problems]

A first aspect according to the present invention is a semantic representation generation method of generating semantic representation data (140) from a natural language including a content word and a function word, comprising:
a preparation step of preparing a CT system table (33) in which concept information hierarchically and ambiguously representing a meaning of a morpheme regarding a part of speech of the content word and a part of speech of the function word is recorded;
a text analysis step (S122, S124, S126, S14, S16) of receiving text data (Din) described in the natural language (S10) and performing a superficial analysis including a syntax analysis on the text data (Din), thereby generating syntax data (D2) representing a structure of a sentence included in the text data (Din); and
a semantic analysis step (S18) of generating the semantic representation data (140) corresponding to the text data (Din) based on the syntax data (D2), wherein
the text analysis step includes a concept tag providing step (S124) of providing a concept tag (CT) indicating the concept information for each the morpheme included in the text data (Din) based on the syntax data (D2) with reference to the CT system table (33),
the semantic analysis step (S18) includes:
   a semantic tag providing step (S182) of providing a first semantic tag (ST) indicating semantic information representing a semantic relation between a first phrase/sequence of phrases and a second phrase/sequence of phrases to a first pair made up of the first phrase/sequence of phrases corresponding to a predicate and the second phrase/sequence of phrases having a modification relation with the predicate in the text data (Din) based on the syntax data (D2); and
   a data generation step (S184) of generating the semantic representation data (140) based on the concept tag (CT) provided for each the morpheme included in the text data (Din) and the first semantic tag (ST) provided to the first pair.

A second aspect of the present invention is the semantic representation generation method according to the first aspect of the present invention, wherein
in the preparation step, an ST system table (34) associating a rule for determining a second pair to which one of a plurality of second semantic tags (ST) should be provided is further prepared for each of the plurality of second semantic tags (ST) indicating plural pieces of semantic information, respectively, each representing a semantic relation between a phrase/sequence of phrases and a phrase/sequence of phrases constituting a second pair, and
in the semantic tag providing step (S182), one of the second semantic tags (ST) is provided to the second pair based on the syntax data (D2) with reference to the ST system table (34).

A third aspect according to the present invention is a semantic representation generation device (10) generating semantic representation data (140) from a natural language including a content word and a function word, comprising:
a CT system storage part (330) storing a CT system table (33) in which concept information hierarchically and ambiguously representing a meaning of a morpheme is recorded in each of a part of speech of the content word and a part of speech of the function word for each of the part of speeches;
a text analysis part (246) receiving text data (Din) described in the natural language and performing a superficial analysis including a syntax analysis on the text data (Din), thereby generating syntax data (D2) representing a structure of a sentence included in the text data (Din) (S122, S124, S126, S14, S16); and
a semantic analysis part (118) generating the semantic representation data (140) corresponding to the text data (Din) (S18) based on the syntax data (D2), wherein
the text analysis part (246) provides a concept tag (CT) indicating the concept information (S124) for each the morpheme included in the text data (Din) based on the syntax data (D2) with reference to the CT system table (33),
the semantic analysis part (118)
   provides a first semantic tag (ST) (S182) indicating semantic information representing a semantic relation between a first phrase/sequence of phrases and a second phrase/sequence of phrases to a first pair made up of the first phrase/sequence of phrases corresponding to a predicate and the second phrase/sequence of phrases having a modification relation with the predicate in the text data (Din) based on the syntax data (D2), and
   generates the semantic representation data (140) (S184) based on the concept tag (CT) provided for each the morpheme included in the text data (Din) and the first semantic tag (ST) provided to the first pair.

A fourth aspect according to the present invention is a semantic representation generation program (31) for generating semantic representation data (140) from a natural language including a content word and a function word, wherein
the semantic representation generation program (31) makes a computer (20) execute:
a text analysis step (S122, S124, S126, S14, S16) of receiving text data (Din) described in the natural language (S10) and performing a superficial analysis including a syntax analysis on the text data (Din), thereby generating syntax data (D2) representing a structure of a sentence included in the text data (Din) (S14); and
a semantic analysis step (S18) of generating the semantic representation data (140) corresponding to the text data (Din) based on the syntax data (D2),
the computer (20) includes a CT system storage part (330) storing a CT system table (33) in which concept information hierarchically and ambiguously representing a meaning of a morpheme regarding a part of speech of the content word and a part of speech of the function word is recorded,
the text analysis step includes a concept tag providing step (S124) of providing a concept tag (CT) indicating the concept information for each the morpheme included in the text data (Din) based on the syntax data (D2) with reference to the CT system table (33),
the semantic analysis step (S18) includes:
   a semantic tag providing step (S182) of providing a first semantic tag (ST) indicating semantic information representing a semantic relation between a first phrase/sequence of phrases and a second phrase/sequence of phrases to a first pair made up of the first phrase/sequence of phrases corresponding to a predicate and the second phrase/sequence of phrases having a modification relation with the predicate in the text data (Din) based on the syntax data (D2); and
   a data generation step (S184) of generating the semantic representation data (140) based on the concept tag (CT) provided for each the morpheme included in the text data (Din) and the first semantic tag (ST) provided to the first pair.

Another aspect of the present invention is obvious from the description of the above aspect of the present invention and an embodiment and a modification example thereof described hereinafter, thus the description thereof is omitted.

According to the above first aspect of the present invention, obtained is the semantic representation data more appropriately representing a meaning of a word included in the text data described in the natural language than ever before.

According to the above second aspect of the present invention, obtained is the semantic representation data more appropriately and sufficiently representing not only a meaning of a word but also a meaning of a sentence from the text data described in the natural language than ever before.

Both the above third aspect and the above fourth aspect of the present invention have an effect similar to the above first aspect of the present invention.

The effect of another aspect of the present invention is obvious from the description of the effect of the above aspect of the present invention and the effect of an embodiment described hereinafter, thus the description thereof is omitted.

These and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a block drawing illustrating a configuration of a semantic representation generation device according to an embodiment of the present invention.
Fig. 2 is a block drawing illustrating a configuration of a computer operating as the semantic representation generation device according to the embodiment described above.
Fig. 3 is a drawing for explaining a CT system table used in the embodiment described above.
Fig. 4 is a drawing for explaining a part of an ST system table used in the embodiment described above regarding a semantic tag which should be provided between a phrase and a phrase (a pair of phrases).
Fig. 5 is a drawing for explaining a part of the ST system table used in the embodiment described above regarding a semantic tag which should be provided between a sequence of phrases and a phrase or between a sequence of phrases and a sequence of phrases.
Fig. 6 is a drawing for explaining a part of the ST system table used in the embodiment described above regarding a semantic tag which should be provided between a sentence and a sentence (a pair of sentences).
Fig. 7 is a flow chart illustrating a procedure of a semantic representation generation process executed to operating a computer as the semantic representation generation device according to the embodiment described above.
Fig. 8 is a flow chart illustrating a procedure of a morphological analysis in the semantic representation generation process described above.
Fig. 9 is a flow chart illustrating a procedure of a syntax analysis in the semantic representation generation process described above.
Fig. 10 is a flow chart illustrating a procedure of a context analysis in the semantic representation generation process described above.
Fig. 11 is a flow chart illustrating a procedure of a semantic analysis in the semantic representation generation process described above.
Fig. 12A to Fig. 12D are drawings for explaining the semantic representation generation process described above based on specific examples.
Fig. 13A to Fig. 13D are drawings for explaining a first generation example of semantic representation data in the embodiment described above.
Fig. 14A to Fig. 14C are drawings for explaining a second generation example of semantic representation data in the embodiment described above.
Figs. 15A and 15B are drawings for explaining a third generation example of semantic representation data in the embodiment described above.

### DESCRIPTION OF THE PREFERRED EMBODIMENTS

It is important to generate semantic representation data capable of sufficiently representing a meaning of a word and a meaning of a sentence in natural language data to increase a degree of accuracy of obtaining knowledge in establishing a knowledge base from the natural language data and achieving a question answering system in natural language. An embodiment of a device and a method for generating such semantic representation data is described hereinafter with reference to the drawings. A semantic representation generation device according to the present embodiment is typically achieved using a computer, and a semantic representation generation method according to the present embodiment is typically executed using a computer. A semantic representation generation program according to the present embodiment is used to make the computer function as the semantic representation generation device.

### <1. Functional configuration of semantic representation generation device>

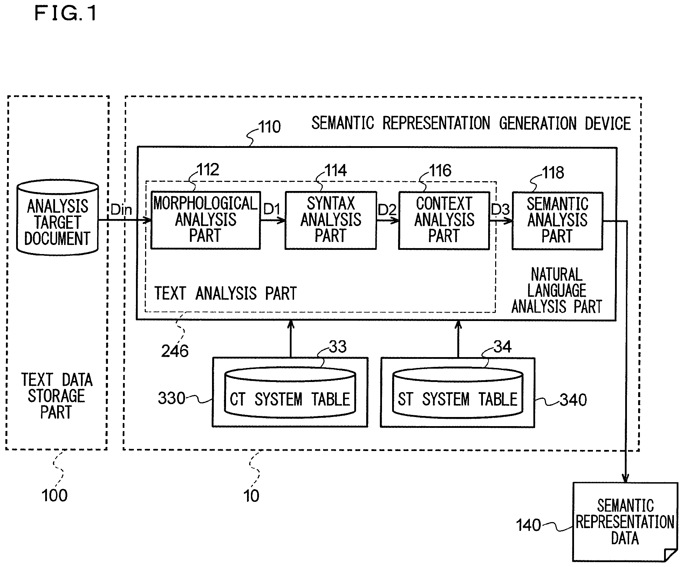

Fig. 1 is a block drawing illustrating a functional configuration of a semantic representation generation device 10 according to the present embodiment. This semantic representation generation device 10 generates semantic representation data from natural language data (text data of a document etc. described in a natural language), and is achieved by a computer executing a semantic representation generation program described hereinafter.

As illustrated in Fig. 1, the semantic representation generation device 10 includes a natural language analysis part 110, a CT system table storage part 330, and an ST system table storage part 340. The CT system table storage part 330 stores a CT system table 33. The ST system table storage part 340 stores an ST system table 34. The natural language analysis part 110 includes a morphological analysis part 112, a syntax analysis part 114, a context analysis part 116, and a semantic analysis part 118. In the present embodiment, the text data as an analysis target of the semantic representation generation device 10 (referred to as "analysis target document" in Fig. 1) is text data described in Japanese, and is stored in a text data storage part 100 provided outside.

In such a semantic representation generation device 10, the natural language analysis part 110 reads the text data which is data as an analysis target and described in the natural language from the text data storage part 100. In the natural language analysis part 110, the morphological analysis part 112 firstly performs a morphological analysis on text data (referred to as "input text data" hereinafter) Din which has been read, thereby generating data (referred to as "spaced-writing data" hereinafter) D1 in which the input text data is separated for each morpheme. In this the morphological analysis, a part of speech and an inflected form of a morpheme included in the spaced-writing data D1 are also determined. In the morphological analysis, a concept tag (also referred to as "CT" hereinafter) is provided to each morpheme in the spaced-writing data D1 with reference to the CT system table 33.

The syntax analysis part 114 performs the syntax analysis on the spaced-writing data D1 as a result of the morphological analysis, thereby generating syntax data D2 representing a structure (a dependency structure and a phrase structure) for each sentence included in the input text data Din.

The context analysis part 116 performs the context analysis on the input text data Din based on the syntax data D2 described above, thereby specifying an antecedent referenced by an anaphor included in the input text data Din, and specifies a pair of sentences having a discourse relation in the input text data Din to generate context data representing an anaphoric relation and the discourse relation in the input text data Din, and outputs context-syntax data D3 made up of the context data and the syntax data D2 described above. The morphological analysis part 112, the syntax analysis part 114, and the context analysis part 116 are collectively referred to as a text analysis part 246 in some cases hereinafter.

The semantic analysis part 118 provides, based on the context-syntax data D3 described above, the semantic tag (also referred to as "ST" hereinafter), which indicates the semantic information representing the semantic relation between a phrase or a sequence of phrases ("the phrase or the sequence of phrases" is also referred to as "the phrase/sequence of phrases" hereinafter) and the other phrase/sequence of phrases in a pair having a modification relation in the input text data Din, to the pair thereof with reference to the ST system table 34 described above. The semantic analysis part 118 generates the semantic representation data 140 corresponding to the input text data Din based on the concept tag provided to each morpheme included in the syntax data D2 described above and the semantic tag provided to the pair. The other type of semantic tag is provided also between a sentence and a sentence having a discourse relation, and is described hereinafter. The semantic tag indicating the semantic information representing the semantic relation between the phrase/sequence of phrases and the phrase/sequence of phrases having the modification relation is also referred to as a first semantic tag hereinafter.

### <2. Hardware configuration of semantic representation generation device>

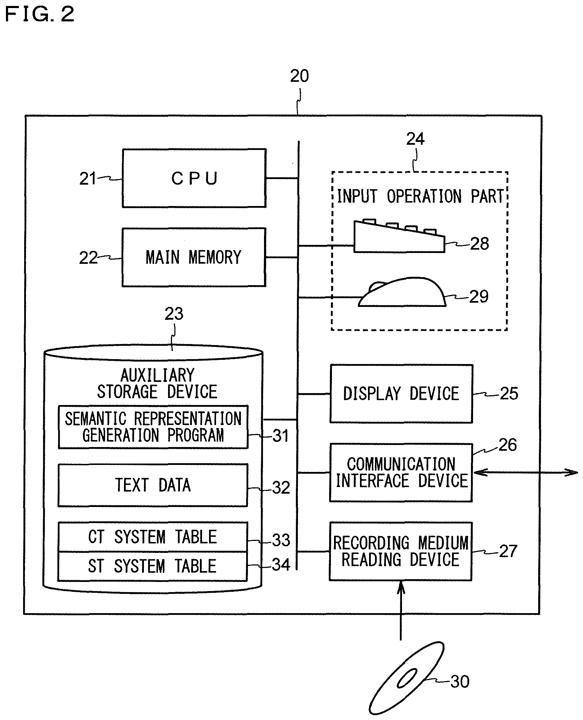

Fig. 2 is a block drawing illustrating a configuration of a computer 20 operating as the semantic representation generation device 10 by a semantic representation generation program described hereinafter in the present embodiment, that is to say, a hardware configuration of the semantic representation generation device 10 according to the present embodiment. The computer 20 illustrated in Fig. 2 includes a CPU21, a main memory 22, an auxiliary storage device 23, an input operation part 24, a display device 25, a communication interface device 26, and a recording medium reading device 27. A DRAM, for example, is used for the main memory 22. A hard disk or a solid state drive, for example, is used for the auxiliary storage device 23. The input operation part 24 includes a keyboard 28 or a mouse 29, for example. A liquid crystal display, for example, is used for the display device 25. The communication interface device 26 is a interface circuit of a wire communication or a wireless communication. The recording medium reading device 27 is an interface circuit of a recording medium 30 storing a program, for example. A non-transient recording medium such as a CD-ROM, a DVD-ROM, or an USB memory, for example, is used for the recording medium 30.

In the computer 20 having the above configuration, the auxiliary storage device 23 stores text data 32 as an analysis target, the CT system table 33, and the ST system table 34 in addition to a semantic representation generation program 31 according to the present embodiment. The auxiliary storage device 23 stores the text data 32, thus the text data storage part 100 in the semantic representation generation device 10 in Fig. 1 is achieved. The auxiliary storage device 23 functions as a recording medium which can be read by the computer 20 and stores the semantic representation generation program 31. The semantic representation generation program 31, the text data 32, the CT system table 33, and the ST system table 34 may be received from a server or the other computer using the communication interface device 26, or may also be read from the recording medium 30 using the recording medium reading device 27, for example.

When the semantic representation generation program 31 is executed in the computer 20, the main memory 22 loads the semantic representation generation program 31, and the main memory 22 partially or wholly loads the text data 32 as the input text data Din. The CPU 21 uses the main memory 22 as an operation memory, and executes the semantic representation generation program 31 stored in the main memory 22, thereby performing a semantic representation generation process on the input text data Din stored in the main memory 22. The semantic representation data 140 corresponding to the input text data Din is generated by this semantic representation generation process. When the CPU 21 performs the semantic representation generation process, the computer 20 functions as the semantic representation generation device 10. The configuration of the computer 20 described above is only one example, thus the semantic representation generation device 10 can be achieved using various computers.

### <3. CT system table and ST system table>

In the present embodiment, a CT system table and an ST system table described hereinafter are previously prepared, and are stored in the auxiliary storage device 23 as described above (Fig. 2).

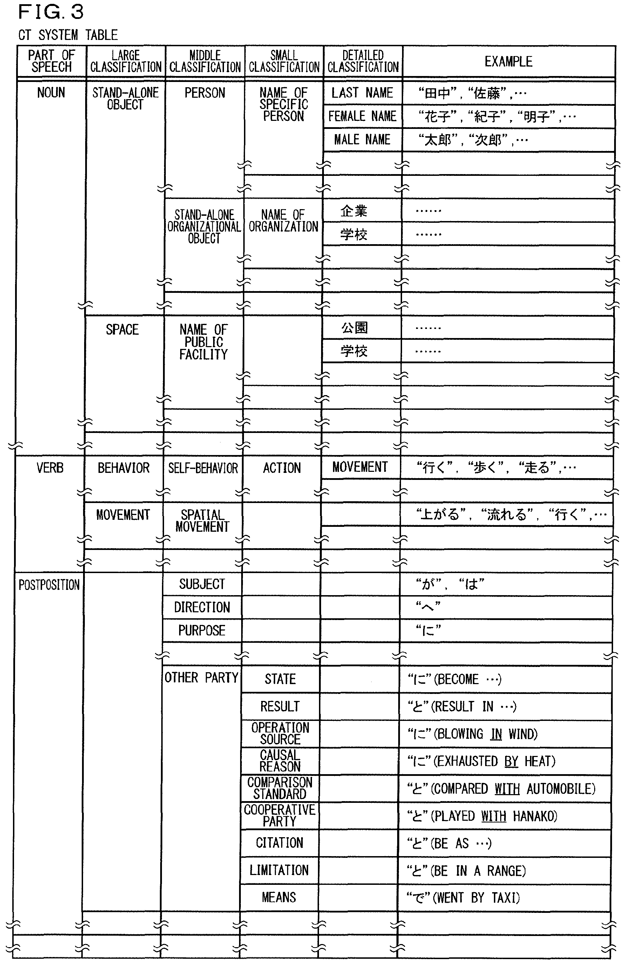

Fig. 3 is a drawing for explaining the CT system table 33 used in the present embodiment. The CT system table 33 records concept information hierarchically and ambiguously representing a meaning of a morpheme of all of part of speeches in Japanese as a natural language, that is to say, a morpheme of a content word (for example, a noun, a verb, or an adjective) included in a natural language, as well as a morpheme of a function word (for example, a postposition or an auxiliary verb) part of speech included in a natural language. As illustrated in Fig. 3, it is recorded that a high-level concept of a noun " 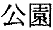 " (park) and a noun " 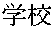 " (school) is "name of public facility", and a higher-level concept thereof is "space", for example. It is also recorded that a high-level concept of a noun " 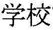 " and a noun " 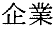 " (company) is "name of organization", a higher-level concept thereof is "stand-alone organizational object", and a still higher-level concept thereof is "stand-alone object". That is to say, as for " 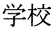 ", concept information hierarchically and ambiguously representing a meaning thereof is recorded. It is recorded that a concept representing a meaning of a postposition " 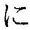 " is "state", "operation source", or "causal reason", and a high-level concept of the concept thereof is "other party", for example. That is to say, as for the postposition " 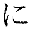 ", concept information hierarchically and ambiguously representing a meaning thereof is recorded.

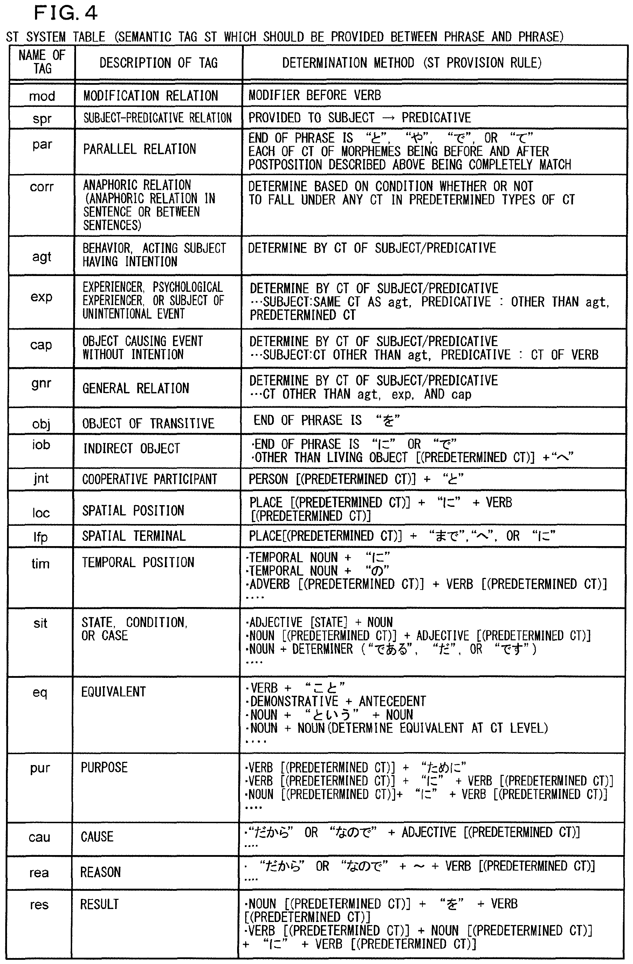

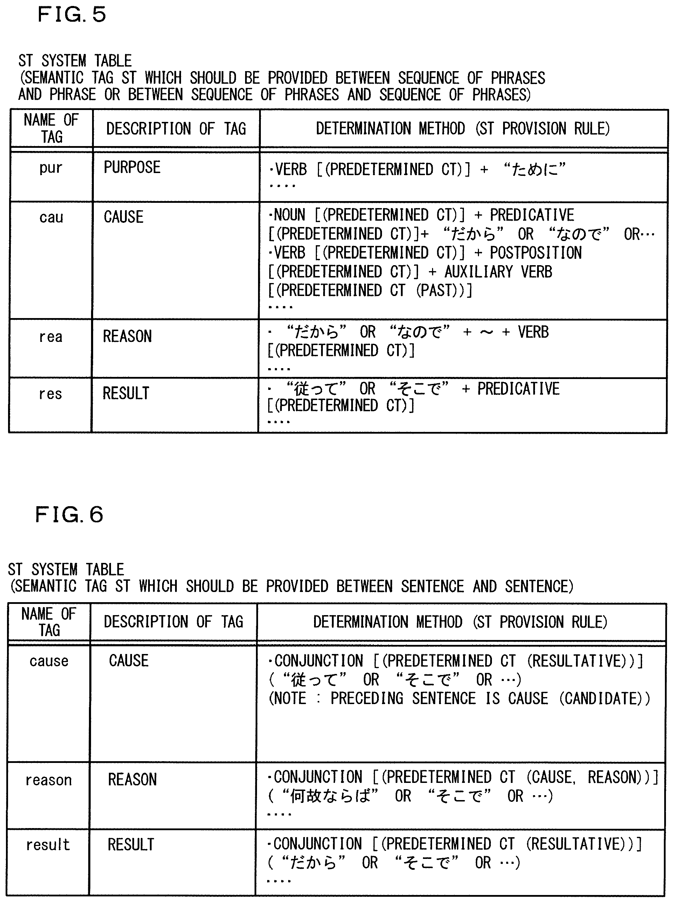

Fig. 4 to Fig. 6 are drawings for explaining the ST system table 34 used in the present embodiment. Fig. 4 is a drawing for explaining a part of the ST system table 34 regarding a semantic tag (ST) which should be provided between a phrase and a phrase (a pair of phrases) semantically related in text data described in Japanese as natural language data. Fig. 5 is a drawing for explaining a part of the ST system table 34 regarding a semantic tag (ST) which should be provided between a sequence of phrases and a sequence of phrases or between a sequence of phrases and a phrase semantically related in text data described in Japanese. Fig. 6 is a drawing for explaining a part of the ST system table 34 regarding a semantic tag (ST) which should be provided between a sentence and a sentence (a pair of sentences) semantically related in text data described in Japanese.

The ST system table is a table associating a rule for determining a pair of phrase/sequence of phrases to which one of a plurality of semantic tags (ST) should be provided for each of the plurality of semantic tags indicating plural pieces of semantic information, respectively, each representing a semantic relation between a phrase/sequence of phrases and a phrase/sequence of phrases in Japanese as the natural language. As illustrated in Fig. 4, a method of determining a target (herein, a pair of phrases) to which a semantic tag, which indicates semantic information representing a semantic relation between a phrase and a phrase, should be provided is provided as a rule of providing the semantic tag. For example, as for a semantic tag "agt" indicating semantic information of "behavior, acting subject having intention", according to a determination method (ST provision rule) corresponding to the semantic tag "agt" in the ST system table 34 in Fig. 4, the semantic tag "agt" is provided to "a pair of phrases in a subject-predicate relation to which a predetermined concept tag (predetermined CT) is provided to a morpheme included in those phrases". "The predetermined concept tag (predetermined CT)" herein is selected based on the CT system table 33 in accordance with semantic information representing a semantic relation of a pair of phrases to which this semantic tag "agt" should be provided, specifically. The same applies to "the predetermined CT" used for defining a determination method (ST provision rule) corresponding to the other semantic tag, and an appropriate concept tag (CT) is selected based on the CT system table 33 in accordance with semantic information representing a semantic relation of a pair of phrases to which the semantic tag should be provided.

Fig. 3 to Fig. 6 exemplifies contents of the CT system table 33 and the ST system table 34 from a viewpoint of convenience of description of the present embodiment. The contents thereof is appropriately omitted and simplified compared with the CT system table 33 and the ST system table 34 which are actually used. Specific contents (an aspect of hierarchy of a concept of a morpheme and a provision rule of a semantic tag) of the CT system table 33 and the ST system table 34 are not also limited thereto illustrated in Fig. 3 to Fig. 6.

### <4. Semantic representation generation process>

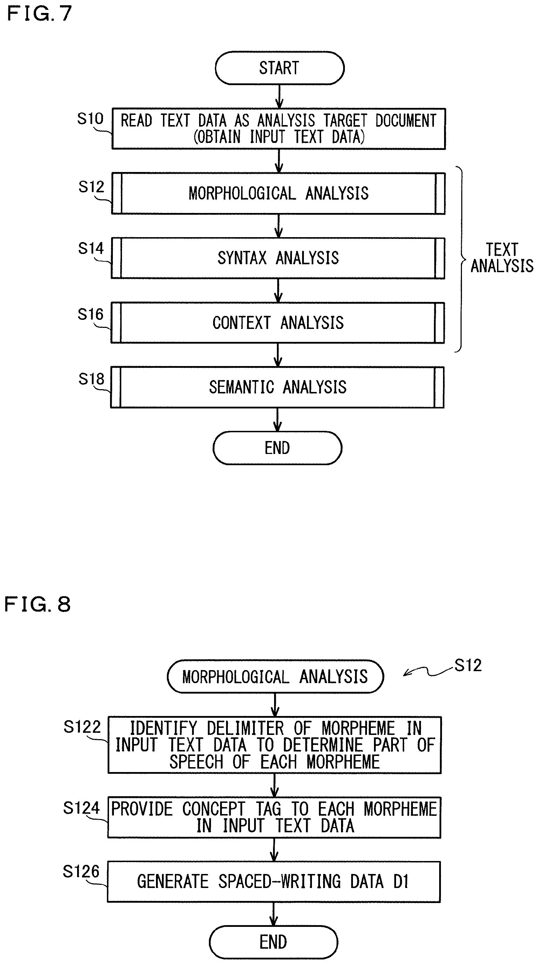

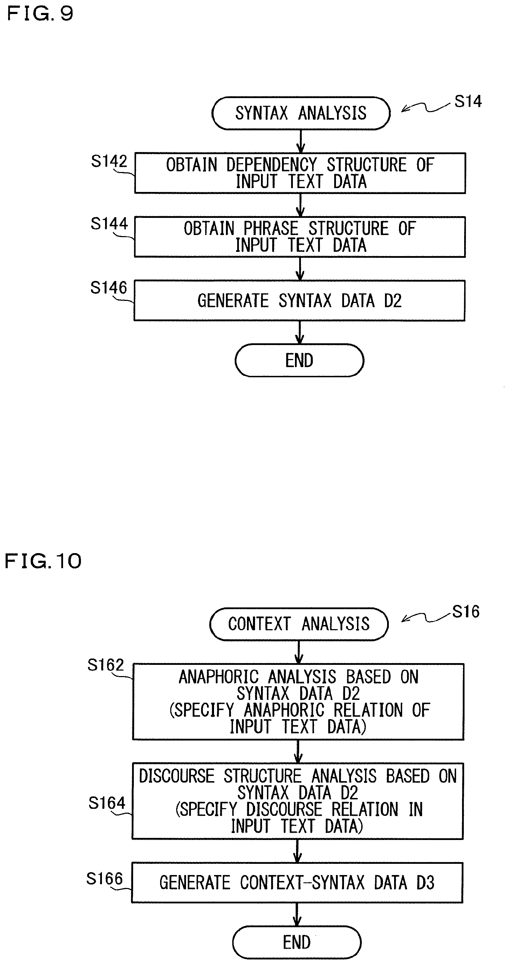

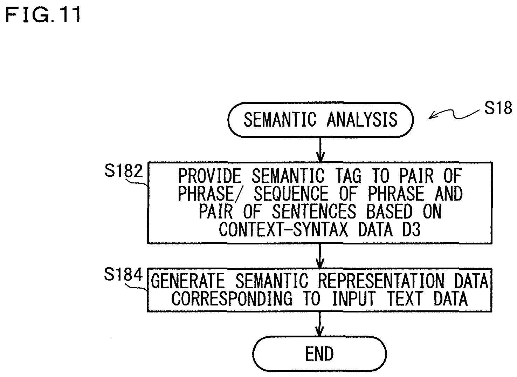

As described above, the CPU 21 executes the semantic representation generation program 31 in the computer 20, thus a semantic representation generation process is performed on text data of a natural language as an analysis target document. Fig. 7 is a flow chart illustrating a procedure of the semantic representation generation process. The semantic representation generation process includes a morphological analysis, a syntax analysis, a context analysis, and a semantic analysis. Fig. 8 is a flow chart illustrating a procedure of the morphological analysis, Fig. 9 is a flow chart illustrating a procedure of the syntax analysis, Fig. 10 is a flow chart illustrating a procedure of the context analysis, and Fig. 11 is a flow chart illustrating a procedure of the semantic analysis. In the description hereinafter, the morphological analysis, the syntax analysis, and the context analysis are also collectively referred to as "text analysis". In the present embodiment, the CPU 21 executes the semantic representation generation program 31, thus the computer 20 is operated as illustrated in Fig. 7 to Fig. 11.

As illustrated in Fig. 7, firstly, the text data 32 partially or wholly read from the auxiliary storage device 23 based on a command of an input operation etc. by a user on the input operation part 24 is stored in the main memory 22 (Step S10) as the input text data Din. The CT system table 33 and the ST system table 34 may be appropriately referenced in a step of the semantic representation generation process while being stored in the auxiliary storage device 23, however, alternately, the CT system table 33 and the ST system table 34 may also be read from the auxiliary storage device 23 and stored in the main memory 22 in Step S10 to increase a speed of the semantic representation generation process.

Next, the morphological analysis is performed on the input text data Din (Step S12). As illustrated in Fig. 8, in the morphological analysis, a delimiter of morphemes in the input text data Din is identified to determine a part of speech of each morpheme included in the input text data Din (Step S122).

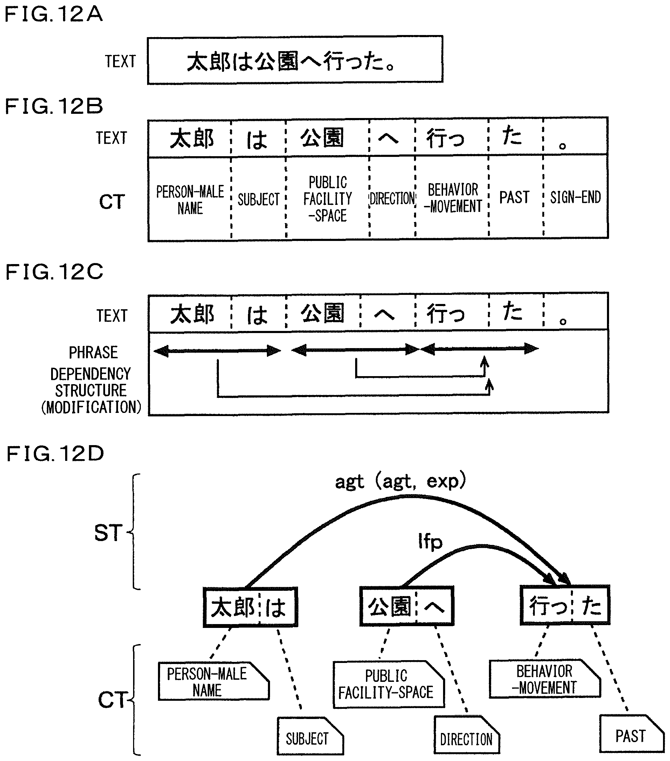

Subsequently, the concept tag (CT) is provided to each morpheme in the input text data Din with reference to the CT system table 33 (Step S124). As described above, recorded in the CT system table 33 is the concept information hierarchically and ambiguously representing the meaning of the morpheme used in the natural language (refer to Fig. 3). The concept tag (CT) described above indicates the concept information. In providing the concept tag to each morpheme in the input text data Din, the concept tag falling under the morpheme is searched in order from a lowest concept (including an example) toward an upper concept in the CT system table 33, and the concept tag determined to be fall under the morpheme firstly is provided to the morpheme. Provision of the concept tag to each morpheme in the input text data Din is described with reference to Figs. 12A to 12D.

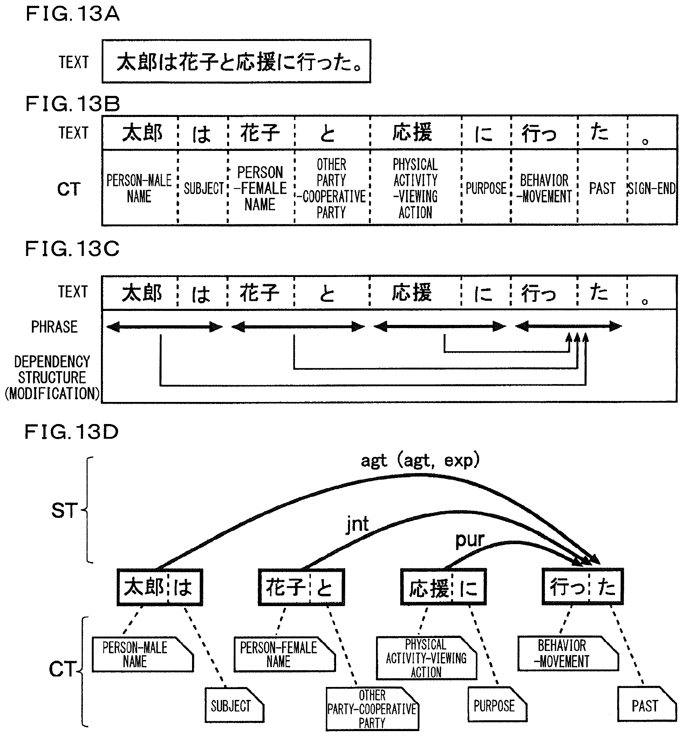

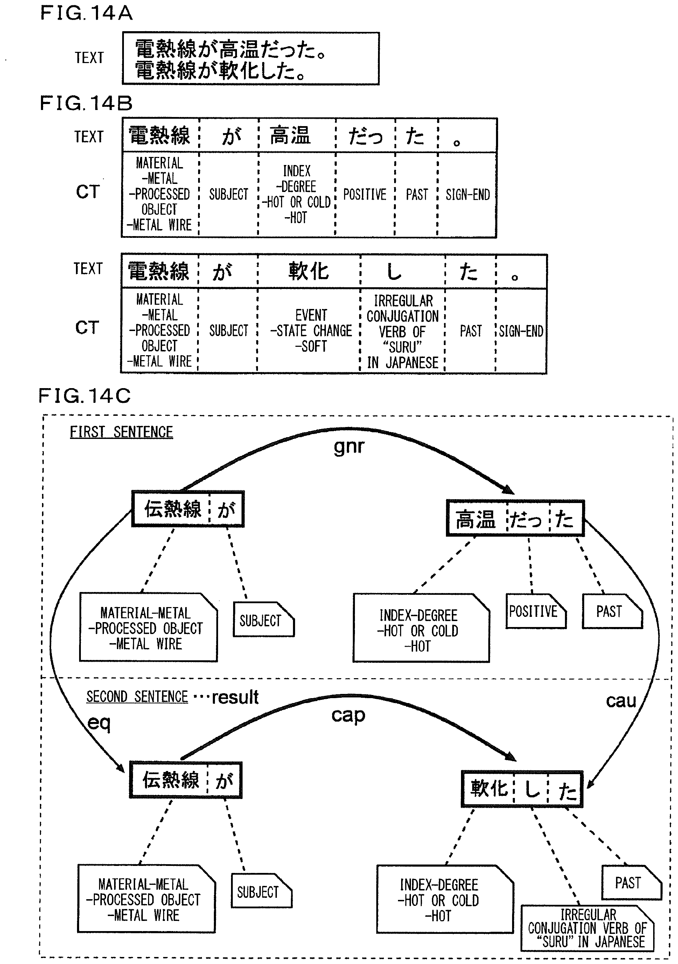

Figs. 12A to 12D are drawings for explaining the semantic representation generation process in the present embodiment based on specific examples. Herein, the semantic representation generation process is described with a focus on a text that the input text data Din includes a sentence (text) illustrated in Fig. 12A, that is to say, " 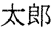 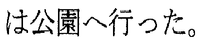 " (Taro went to the park.) This text is divided into seven morphemes as illustrated in Fig. 12B in Steps S122 and S124 so that the concept tag (CT) is provided to each morpheme. In Fig. 12B, dotted line extending in a vertical direction show delimiters of the morphemes (the same applies to Figs. 13A to 13D and 14A to 14C hereinafter). In the description hereinafter, data divided into morphemes, each of which is provided with a concept tag and a part of speech, as illustrated in Fig. 12B is referred to as "spaced-writing data".

Next, the spaced-writing data D1 corresponding to the input text data Din is generated based on the delimiter of the morphemes and provision of the part of speech and the concept tag to each morpheme in the input text data Din in Step S122 and S124 described above (Step S126). When the spaced-writing data D1 is generated, the morpheme process (Step S12) is finished, and the process proceed to Step S14 in Fig. 7 to perform the syntax analysis.

As illustrated in Fig. 9, in the syntax analysis (Step S14), based on the spaced-writing data D1, a dependency structure in the input text data Din, that is to say, a modification structure of the phrases in the input text data Din is obtained (Step S142), and a phrase structure in the input text data Din is obtained (Step S144). Herein, the phrase structure indicates a structure indicating how phrases are formed from morphemes included in the input text data Din and how a sequence of phrases is formed from the phrases, that is to say, a hierarchical structure of a sentence made up of the morpheme, the phrase, and the sequence of phrases. According to these Steps S142 and S144, the dependency structure and the phrase structure are obtained as illustrated in Fig. 12C based on the spaced-writing data D1 (Fig. 12B) for the text described above in Fig. 12A, for example. The text in Fig. 12A " 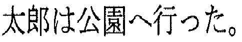 " (Taro went to the park.) does not include the sequence of phrases, but is made up of three phrases (" 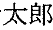 " (Taro), " 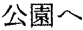 " (to the park), and " 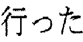 " (went)) as illustrated in Fig. 12C, and these phrases have a modification relation as illustrated in Fig. 12C.

Generated subsequently in this syntax analysis is the syntax data D2 representing the structure (the dependency structure and the phrase structure) of each sentence included in the input text data Din based on the dependency structure and the phrase structure obtained as described above (Step S 146). When the syntax data D2 is generated, the syntax analysis (Step S 14) is finished, and the process proceed to Step S16 in Fig. 7 to perform the context analysis.

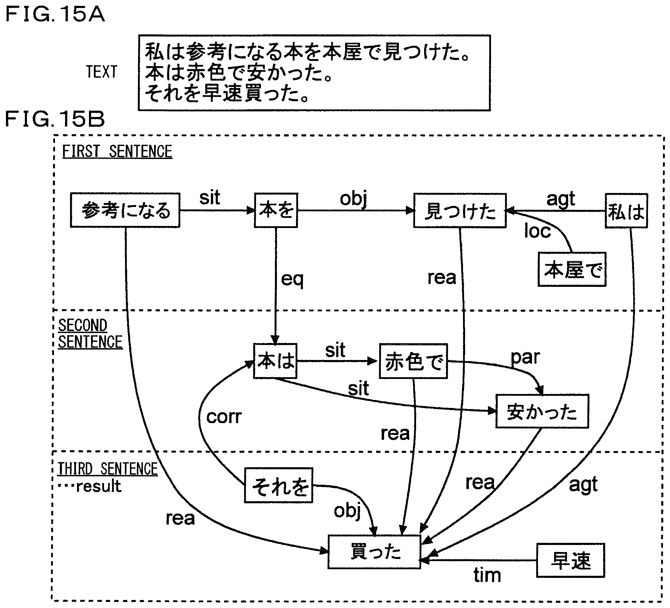

As illustrated in Fig. 10, in the context analysis (Step S16), an anaphoric analysis is performed on the input text data Din based on the syntax data D2, thereby specifying an antecedent referenced by an anaphor included in the input text data Din (Step S162). A discourse structure analysis is performed on the input text data Din based on the syntax data D2, thereby specifying a pair of sentences having a discourse relation in the input text data Din, that is to say, a pair of sentences semantically relating to each other (Step S164). Subsequently, context data representing an anaphoric relation and a discourse relation in the input text data Din is generated based on these specified results, and the context-syntax data D3 is generated from the context data and the syntax data D2 described above. When the context-syntax data D3 is generated, the context analysis (Step S16) is finished, and the process proceed to Step S18 in Fig. 7 to perform the semantic analysis. Usage of the context-syntax data D3 obtained by such anaphoric analysis and discourse structure analysis is described in relation to second and third generation example of the semantic representation data 140 described hereinafter (refer to Figs. 14A to 14C, 15A, and 15B).

As illustrated in Fig. 11, in the semantic analysis (Step S18), the semantic tag is provided between the phrase and the phrase (pair of phrases), between the sequence of phrases and the phrase (pair of sequence of phrases and phrase), and between the sequence of phrases and the sequence of phrases (pair of sequences of phrases) having a modification relation in the input text data Din based on the context-syntax data D3 with reference to the ST system table 34, and a third semantic tag ("second semantic tag" is described hereinafter), which indicates semantic information of a semantic relation between sentences (pair of sentences) having an anaphoric relation or the discourse relation in the input text data Din, is provided between the sentence and the sentence (pair of sentences) based on the context-syntax data D3. In the description hereinafter, the phrase, the sequence of phrases, and the sentence are collectively referred to as "the text constituent element", and a pair of text constituent elements having the modification relation or the discourse relation are semantically related to each other.

When the semantic tag is provided to the pair of text constituent elements included in the input text data Din in Step S182, the semantic representation data 140 corresponding to the input text data Din is generated next based on the concept tag provided to each morpheme in the input text data Din and the semantic tag provided to the pair of text constituent elements having the semantic relation in the input text data Din (Step S184).

For example, data of a semantic representation illustrated in Fig. 12D is generated for a text " 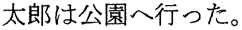 " (Taro went to the park.) illustrated in Fig. 12A. In the semantic representation illustrated in Fig. 12D, the phrases " 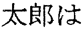 ", " 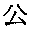 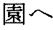 ", and " 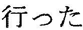 " as the text constituent elements are nodes, an edge is provided between the nodes semantically related to each other (between the phrases having the modification relation), the semantic tag (ST) (herein, the first semantic tag) indicating semantic information representing a semantic relation between the nodes is provided to the edge, and the concept tag (CT) indicating concept information representing each meaning is provided to each of the morphemes " 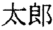 ", " 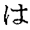 ", " 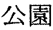 ", " 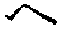 ", " 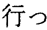 ", " 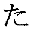 ". In the computer 20 as the semantic representation generation device 10 according to the present embodiment, the semantic representation data 140 of an appropriate data structure (a data structure appropriate for a process in a computer) corresponding to a semantic representation illustrated in Fig. 12D is generated in the main memory 22, and is appropriately stored in the auxiliary storage device 23, for example.

A semantic tag "lfp" indicating semantic information of "spatial terminal" representing a semantic relation between two phrases " 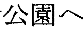 " (to the park) and " 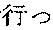 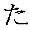 " (went) is provided between the two phrases (refer to Fig. 4). A semantic tag "agt" indicating semantic information of "behavior, acting subject having intention" representing a semantic relation between two phrases " 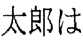 " (Taro) and " 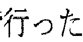 " (went) is provided between the two phrases. However, a semantic relation represented by semantic information of "experiencer, ···" indicated by a semantic tag "exp" is also determined to fall under a modification relation of these phrases depending on a determination method (ST provision rule) in the ST system table 34 (refer to Fig. 4). In this case, the two semantic tags "agt" and "exp" are provided between " 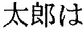 " (Taro) and " 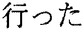 " (went).

The semantic representation data 140 described above is generated in Step S184, the semantic analysis (Step S18) is finished. As illustrated in Fig. 7, the semantic representation generation process according to the present embodiment is finished by finishing the semantic analysis.

A process by a well-known method or a publicly known method may be adopted to the specific process of the morphological analysis (Fig. 8), the syntax analysis (Fig. 9), and the context analysis (Fig. 10) in the semantic representation generation process (Fig. 7) in the present embodiment except for the provision of the concept tag based on the CT system table 33 (Fig. 3), thus is not limited to the process described above.

### <5. Generation example of semantic representation data>

### <5.1 First generation example>

Fig. 13A to Fig. 13D are drawings for explaining a first generation example of the semantic representation data 140 in the present embodiment. That is to say, Fig. 13A to 13D are drawings for explaining what type of the semantic representation data 140 is generated from a text made up of one sentence " 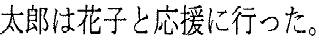 " (Taro went to cheer with Hanako.) illustrated in Fig. 13A by the semantic representation generation process (Fig. 7) when such a text is included in the input text data Din.

In the present example, the text in Fig. 13A is divided into nine morphemes " 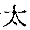 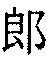 ", " 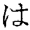 ", " 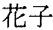 ", " 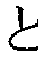 ", " 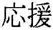 ", " 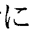 ", " 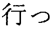 ", " 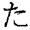 ", and "_{∘}" as illustrated in Fig. 13B by the morphological analysis (Step S12) in the semantic representation generation process, and the concept tag (CT) is provided to each morpheme. With a focus on morphemes " 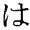 " and " 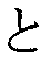 " of a postposition in this text, concept information provided with regard to " 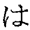 " in the CT system table 33 does not hierarchically express a meaning thereof, however, concept information provided with regard to " 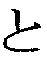 " in the CT system table 33 hierarchically and ambiguously represents a meaning thereof. That is to say, as illustrated in Fig. 3, with regard to the postposition " 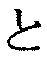 ", a concept representing a meaning thereof is recorded as "result", "comparison standard", "cooperative party", "citation", or "limitation", and an upper concept of these concepts is recorded as "other party". As illustrated in Fig. 13B, a concept tag indicating concept information of "cooperative party-other party" is provided to the postposition " 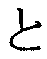 " in the present example. In a stage of the morphological analysis, with regard to a morpheme having ambiguous meanings such as the preposition " 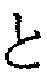 ", the plurality of concept tags may be ambiguously provided to the morpheme. However, in a case where the plurality of concept tags have meanings opposite to each other, the concept tag is provided again to the morpheme in accordance with the concept tags of morphemes before and after the morpheme in the text to be analyzed when the semantic tag is provided to the pair of text constituent elements (pair of phrases etc.) in a stage of the semantic analysis (S 182 in Fig. 11).

Next, a dependency structure and a phrase structure of the text of the present example (Fig. 13A) are obtained as illustrated in Fig. 13C by the syntax analysis (Step S14).

Subsequently, the semantic analysis (Step S18) is performed through the context analysis (Step S16). In accordance with the semantic analysis, semantic tags (herein, the first semantic tags) "agt" (or "agt, exp"), "jnt", and "pur" are provided to the pairs of the text constituent elements semantically related to each other in the text of the present example (herein, three pairs of phrases each having a modification relation: " 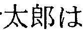 " (Taro) and " 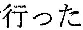 " (went); " 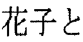 " (with Hanako) and " 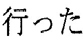 " (went); and " 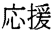 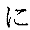 " (to cheer) and " 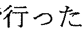 " (went)), and the semantic representation data as illustrated in Fig. 13D is generated as the semantic representation data 140 corresponding to the text of the present example (Fig. 13A) based on the concept tag (CT) provided to each of the morphemes " 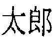 ", " 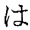 ", " 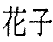 ", " 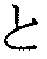 ", " 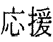 ", " 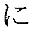 ", " 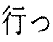 ", and " 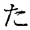 " and the semantic tags (ST) provided to the pairs of the text constituent elements semantically related to each other.

In the semantic representation data 140, the semantic tag ("agt" or "agt, exp") provided between the two phrases " 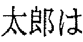 " (Taro) and " 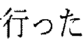 " (went) is the same as the example illustrated in Fig. 12D. Provided between the two phrases " 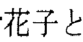 " (with Hanako) and " 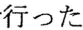 " (went) is a semantic tag "jnt" indicating semantic information of "cooperative participant" representing a semantic relation between the two phrases based on a determination method (an ST provision rule for determining the semantic tag ST which should be provided between a phrase and a phrase) in the ST system table 34 in Fig. 4. Provided between the two phrases " 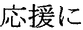 " (to cheer) and " 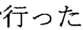 " (went) is a semantic tag "pur" indicating semantic information of "purpose" representing a semantic relation between the two phrases.

### <5.2 Second generation example>

Fig. 14A to Fig. 14C are drawings for explaining a second generation example of the semantic representation data 140 in the present embodiment. That is to say, Fig. 14A to 14C are drawings for explaining what type of the semantic representation data 140 is generated from a text made up of two sentences " 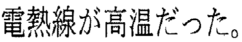 " (A heating wire was hot.) and " 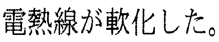 " (A heating wire was softened.) illustrated in Fig. 14A by the semantic representation generation process (Fig. 7) when such a text is included in the input text data Din.

In the present example, in the text in Fig. 14A, a first sentence " 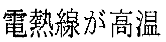 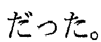 " (A heating wire was hot.) is divided into six morphemes " 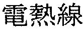 ", " 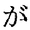 ", " 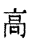 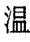 ", " 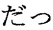 ", " 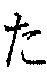 ", and "_{∘} " and a second sentence " 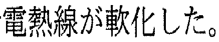 " (A heating wire was softened.) is divided into six morphemes " 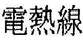 ", " 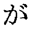 ", " 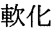 ", " 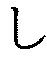 ", " 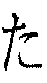 ", and "_{∘} " as illustrated in Fig. 14B by the morphological analysis (Step S12) in the semantic representation generation process. The concept tag (CT) is provided to each morpheme.

Subsequently, the semantic analysis (Step S18) is performed through the syntax analysis (Step S14) and the context analysis (Step S16). In accordance with the semantic analysis, a semantic tag "gnr" is provided to the pair of the text constituent elements semantically related to each other in the text (Fig. 14A) of the present example (herein, one pair of phrases having a modification relation in the first sentence (" 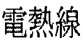 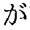 " (A heating wire) and " 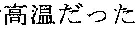 " (was hot))). A semantic tag "cap" is provided to one pair of phrases (the pair of " 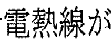 " (A heating wire) and " 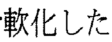 " (was softened)) having a modification relation in the second sentence. The semantic representation data as illustrated in Fig. 14C is generated as the semantic representation data 140 corresponding to the text of the present example based on the concept tag (CT) provided to each of the morphemes " 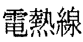 ", " 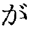 ", " 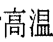 ", " 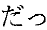 ", " 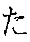 ", " 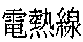 ", " 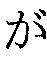 ", " 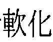 ", " 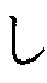 ", and " 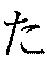 " and the semantic tag (ST) provided to the pair of the text constituent elements semantically related to each other.

In the semantic representation data 140, provided between the two phrases " 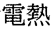 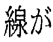 " (A heating wire) and " 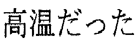 " (was hot) in the first sentence is a semantic tag "gnr" indicating semantic information of "general relation" representing a semantic relation between the two phrases based on a determination method in the ST system table 34 (an ST provision rule for determining the semantic tag ST which should be provided between a phrase and a phrase) illustrated in Fig. 4, and provided between the two phrases " 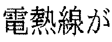 " (A heating wire) and " 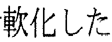 " (was softened) in the second sentence is a semantic tag "cap" indicating semantic information of "object causing event without intention" representing a semantic relation between the two phrases. Both the semantic tags "gnr" and "cap" provided herein are the first semantic tag. A semantic tag "eq" indicating semantic information of "equivalent" representing a semantic relation between the phrase " 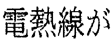 " (A heating wire) in the first sentence and the phrase " 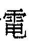 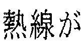 " in the second sentence is provided between those phrases based on the context-syntax data D3 in the present example. The semantic tag "eq" provided herein does not correspond to a modification relation, and is not the first semantic tag. A semantic tag (ST) provided to a phrase/sequence of phrases in a pair having a semantic relation regardless of presence or absence of the modification relation is temporarily referred to as a second semantic tag. The second semantic tag does not depend on presence or absence of the modification relation, thus can also be considered a concept including the first semantic tag corresponding to the modification relation.

In the semantic representation data 140, the second sentence " 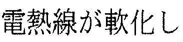 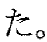 " (A heating wire was softened.) is determined to fall under "result" based on the context-syntax data D3 in the present example. A semantic tag "cau" indicating semantic information representing a semantic relation (cause) between the phrase " 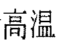 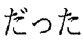 " (was hot) corresponding to a predicative of the first sentence and the phrase " 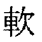 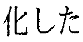 " (was softened) corresponding to a predicative of the second sentence (an edge from " 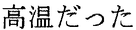 " toward " 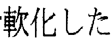 ") is provided between those two phrases based on the determination result and the above semantic tags "gnr", "cap", and "eq" provided between the phrases in the present example. The semantic tag "cau" provided herein falls under the third semantic tag described above.

### <5.3 Third generation example>

Fig. 15A and Fig. 15B are drawings for explaining a third generation example of the semantic representation data 140 in the present embodiment. That is to say, Fig. 15A and 15B are drawings for explaining what type of the semantic representation data 140 is generated from a text made up of three sentences illustrated in Fig. 15A by the semantic representation generation process (Fig. 7) when such a text is included in the input text data Din.

In the present example, the text in Fig. 15A includes a first sentence " 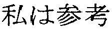 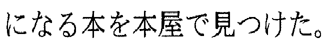 " (I found a helpful book in a book store.), a second sentence " 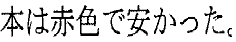 " (The book was red and cheap.), and a third sentence " 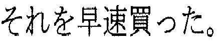 " ((I) bought it immediately.). The semantic analysis (Step S18) is performed on the text through the morphological analysis (Step S12), the syntax analysis (Step S14), and the context analysis (Step S16) in the semantic representation generation process, thus the first sentence " 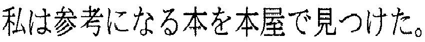 " (I found a helpful book in a book store.), the second sentence " 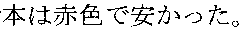 " (The book was red and cheap.), and the third sentence " 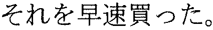 " ((I) bought it immediately.) are divided into morphemes (not shown in the drawings). Then, the concept tag (CT) is provided to each morpheme (refer to Fig. 3), and the semantic ST is provided between the text constituent elements having the semantic relation in the text of the present example (the pair of text constituent elements), thus the semantic representation data as illustrated in Fig. 15B is generated as the semantic representation data 140.

In the semantic representation data 140, a semantic tag "sit" indicating semantic information of "state, condition, or case" representing a semantic relation between two phrases " 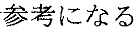 " (helpful) and " 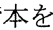 " (book) is provided between the two phrases in the first sentence based on the determination method of the ST system table 34 (the ST provision rule for determining the semantic tag ST which should be provided between the phrases) illustrated in Fig. 4. A semantic tag "obj" indicating semantic information of "object of transitive" representing a semantic relation between two phrases " 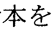 " (book) and " 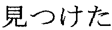 " (found) is provided between the two phrases (corresponding to the first semantic tag). A semantic tag "loc" indicating semantic information of "spatial position" representing a semantic relation between two phrases " 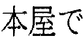 " (in a book store) and " 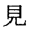 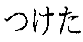 " (found) is provided between the two phrases (corresponding to the first semantic tag). A semantic tag "agt" indicating semantic information of "behavior, acting subject having intention" representing a semantic relation between two phrases " 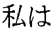 " (I) and " 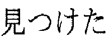 " (found) is provided between the two phrases (corresponding to the first semantic tag). In the second sentence, a semantic tag "sit" indicating semantic information of "state, condition, or case" representing a semantic relation between two phrases " 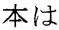 " (book) and " 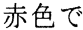 " (red) is provided between the two phrases (corresponding to the first semantic tag). A semantic tag "sit" indicating semantic information of "state, condition, or case" representing a semantic relation between two phrases " 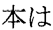 " (book) and " 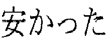 " (cheap) is also provided between the two phrases (corresponding to the first semantic tag). A semantic tag "par" indicating semantic information of "parallel relation" representing a semantic relation between two phrases " 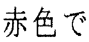 " (red) and " 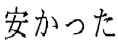 " (cheap) is provided between the two phrases (corresponding to the second semantic tag). In the third sentence, a semantic tag "obj" indicating semantic information of "object of transitive" representing a semantic relation between two phrases " 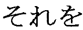 " (it) and " 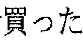 " (bought) is provided between the two phrases, and a semantic tag "tim" indicating semantic information of "temporal position" representing a semantic relation between two phrases " 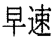 "(immediately) and " 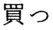 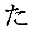 "(bought) is also provided between the two phrases (both corresponding to the first semantic tag). A semantic tag "eq" indicating semantic information of "equivalent" representing a semantic relation between the phrase " 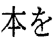 " (book) in the first sentence and the phrase " 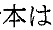 " (book) in the second sentence is provided between the two phrases based on the context-syntax data D3 in the present example (corresponding to the second semantic tag but not corresponding to the first semantic tag). A semantic tag "corr" indicating semantic information of "anaphoric relation" representing a semantic relation between the phrase " 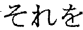 " (it) in the third sentence and the phrase " 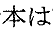 " (book) in the second sentence is provided between the two phrases based on the context-syntax data D3 in the present example (corresponding to the second semantic tag but not corresponding to the first semantic tag). A semantic tag "agt" indicating semantic information of "behavior, acting subject having intention" representing a semantic relation between the phrase " 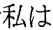 " (I) in the first sentence and the phrase " 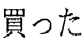 " (bought) in the third sentence is provided between the two phrases based on the context-syntax data D3 in the present example (corresponding to the first semantic tag).

In the semantic representation data 140, the third sentence " 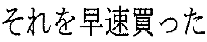 " ((I) bought it immediately.) is determined to fall under "result" based on the context-syntax data D3 in the present example. A semantic tag "rea" indicating semantic information representing a semantic relation (cause) between the phrase " 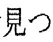 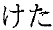 " (found) corresponding to a predicative of the first sentence and the phrase " 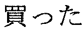 " (bought) corresponding to a predicative of the third sentence is provided between those two phrases as illustrated in Fig. 15B based on the determination result and the above semantic tags provided between the phrases in the present example. In the similar manner, a semantic tag "rea" indicating semantic information representing a semantic relation (cause) between the phrase " 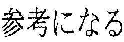 " (helpful) in the first sentence and the phrase " 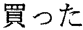 " (bought) in the third sentence, between the phrase " 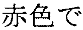 " (red) in the second sentence and the phrase " 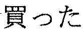 " (bought) in the third sentence, and between the phrase " 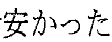 " (cheap) in the second sentence and the phrase " 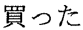 " (bought) in the third sentence is also provided between those phrases. These semantic tags "rea" do not correspond to the first semantic tag, but correspond to the second semantic tag.

### <6. Effect>

According to the present embodiment described above, the concept tag (CT) is provided to not only the morpheme of the content word such as a noun or a verb but also the morpheme of the function word such as a postposition (refer to Fig. 12B, Fig. 13B, and Fig. 14B) with reference to the CT system table 33 (Fig. 3) recording the concept information hierarchically and ambiguously representing the meaning of the morpheme of all the part of speeches in the morphological analysis (Fig. 7 and Fig. 8) on the input text data Din as the natural language data, and the semantic representation data 140 is generated (for example, Fig. 12D, Fig. 13D, and Fig. 14C) based on the provision of such a concept tag to the morpheme in the semantic analysis (Fig. 7 and Fig. 11). Accordingly, obtained is the semantic representation data 140 more appropriately representing a meaning of a word included in the natural language data than ever before.

According to the present embodiment, the semantic analysis (Fig. 11) is performed on the input text data Din as the natural language data through the syntax analysis (Fig. 9) and the context analysis (Fig. 10) after the morphological analysis (Fig. 8) including the provision of the concept tag to the morpheme described above. In the semantic analysis, the semantic tag (ST) is provided to each of the pair of text constituent elements (the phrase, the sequence of phrases, or the sentence) semantically related in the input text data Din with reference to the ST system table 34, and the semantic representation data 140 is generated (for example, Fig. 12D, Fig. 13D, and Fig. 14C) based on the provision of the concept tag to the morpheme described above and the provision of the semantic tag to the pair of such text constituent elements. In the ST system table 34 referenced at this time, as illustrated in Fig. 4, the ST provision rule (the method for determining the type of the pair of text constituent elements to which the semantic tag should be provided) is provided to each of the plurality of semantic tags each illustrating the plural pieces of semantic information representing the semantic relation of the pair of text constituent elements (the phrase, the sequence of phrases, or the sentence) semantically related in the natural language regardless of whether or not the text constituent element of the phrase/sequence of phrases corresponding to the predicative. Thus, according to the present embodiment, obtained is the semantic representation data 140 representing not only a meaning of a word but also a meaning of a phrase and a meaning of a sentence from natural language data more appropriately and sufficiently than ever before. The ST provision rule provided in the ST system table 34 includes a rule defining the pair of text constituent elements to which the semantic tag should be provided using the concept tag (CT) of the morpheme included in the pair thereof. According to such an ST provision rule, the semantic tag which should be provided to the pair of text constituent elements can be determined more accurately.

When the semantic representation data 140 generated by such a present embodiment is used for obtaining knowledge from a natural language data and a question answering system by a natural language, a degree of accuracy of obtaining the knowledge and reusability of the obtained knowledge can be increased.

### <7. Modification example>

The present invention is not limited to the embodiment described above, however, various modification can be performed within a scope of the present invention.

For example, in the embodiment described above, the input text data Din for generating the semantic representation data 140 is the text data described in Japanese. However, the semantic representation data 140 can be generated from text data of the other natural language such as the input text data Din as text data described in English, for example, by a semantic representation generation device or a semantic representation generation method made up in a manner similar to the semantic representation generation device or the semantic representation generation method according to the embodiment described above.

In the CT system table 33 used in the embodiment described above, as illustrated in Fig. 3, the concept representing the meaning of the morpheme in the natural language is hierarchically classified, however, the hierarchical classification illustrated in Fig. 3 is illustrative, thus the concept representing the meaning of the morpheme in the natural language may be hierarchically classified by the other aspect. The ST provision rule corresponding to each semantic tag in the ST system table 34 used in the embodiment described above may be defined in a form different from the ST provision rule illustrated in Fig. 4 to Fig. 6. Furthermore, in the ST system table 34 used in the embodiment described above, the ST provision rule is provided to the pair of text constituent elements (the phrase, the sequence of phrases, or the sentence) semantically related in the natural language regardless of whether or not the text constituent element as the phrase corresponding to the predicative, however, it is alternatively applicable that the ST provision rule is provided to the pair of text constituent elements only when one of the pair of text constituent elements semantically related in the natural language is a phrase corresponding to the predictive as with a conventional provision of a deep case etc.

While the invention has been shown and described in detail, the foregoing description is in all aspects illustrative and not restrictive. It is therefore understood that numerous modifications and variations can be devised without departing from the scope of the invention.

## Claims

1. A semantic representation generation method of generating semantic representation data (140) from a natural language including a content word and a function word, comprising:
a preparation step of preparing a CT system table (33) in which concept information hierarchically and ambiguously representing a meaning of a morpheme regarding a part of speech of the content word and a part of speech of the function word is recorded;
a text analysis step (S122, S124, S126, S14, S16) of receiving text data (Din) described in the natural language (S10) and performing a superficial analysis including a syntax analysis on the text data (Din), thereby generating syntax data (D2) representing a structure of a sentence included in the text data (Din) (S14); and
a semantic analysis step (S18) of generating the semantic representation data (140) corresponding to the text data (Din) based on the syntax data (D2), wherein
the text analysis step includes a concept tag providing step (S124) of providing a concept tag (CT) indicating the concept information for each the morpheme included in the text data (Din) based on the syntax data (D2) with reference to the CT system table (33),
the semantic analysis step (S18) includes:
a semantic tag providing step (S182) of providing a first semantic tag (ST) indicating semantic information representing a semantic relation between a first phrase/sequence of phrases and a second phrase/sequence of phrases to a first pair made up of the first phrase/sequence of phrases corresponding to a predicate and the second phrase/sequence of phrases having a modification relation with the predicate in the text data (Din) based on the syntax data (D2); and
a data generation step (S184) of generating the semantic representation data (140) based on the concept tag (CT) provided for each the morpheme included in the text data (Din) and the first semantic tag (ST) provided to the first pair.

2. The semantic representation generation method according to claim 1, wherein
in the preparation step, an ST system table (34) associating a rule for determining a second pair to which one of a plurality of second semantic tags (ST) should be provided is further prepared for each of the plurality of second semantic tags (ST) indicating plural pieces of semantic information, respectively, each representing a semantic relation between a phrase/sequence of phrases and a phrase/sequence of phrases constituting the second pair, and
in the semantic tag providing step (S182), one of the second semantic tags (ST) is provided to the second pair based on the syntax data (D2) with reference to the ST system table (34).

3. The semantic representation generation method according to claim 2, wherein
associated in the ST system table (34) is a rule for determining a pair of sentences to which one of a plurality of third semantic tags should be provided for each of the plurality of third semantic tags indicating plural pieces of semantic information, respectively, each representing a semantic relation between a sentence and a sentence in the natural language,
the text analysis step further includes a context analysis step (S 16) of performing a context analysis on the text data (Din) based on the syntax data (D2), thereby generating context data representing an anaphoric relation and a discourse relation in the text data (Din), and
in the semantic tag providing step (S182), one of the third semantic tags is provided to a pair of sentences having an anaphoric relation or a discourse relation in the text data (Din) based on the context data with reference to the ST system table (34).

4. The semantic representation generation method according to claim 2, wherein
in the semantic tag providing step (S182), the plurality of second semantic tags (ST) are provided to one pair made up of a phrase/sequence of phrases and another phrase/sequence of phrases when the plurality of second semantic tags (ST) fall under the one pair in the syntax data (D2) in the ST system table (34).

5. The semantic representation generation method according to claim 2, wherein
in the ST system table (34), a rule for determining a pair of a phrase/sequence of phrases and another phrase/sequence of phrases to which at least one of the plurality of second semantic tags (ST) should be provided is defined using a concept tag (CT) of a morpheme included in the phrase/sequence of phrases constituting the pair.

6. A semantic representation generation device (10) generating semantic representation data (140) from a natural language including a content word and a function word, comprising:
a CT system storage part (330) storing a CT system table (33) in which concept information hierarchically and ambiguously representing a meaning of a morpheme in each of a part of speech of the content word and a part of speech of the function word is recorded for each of the part of speeches;
a text analysis part (246) receiving text data (Din) described in the natural language and performing a superficial analysis including a syntax analysis on the text data (Din), thereby generating syntax data (D2) representing a structure of a sentence included in the text data (Din) (S122, S124, S126, S14, S16); and
a semantic analysis part (118) generating the semantic representation data (140) corresponding to the text data (Din) (S18) based on the syntax data (D2), wherein
the text analysis part (246) provides a concept tag (CT) indicating the concept information (S124) for each the morpheme included in the text data (Din) based on the syntax data (D2) with reference to the CT system table (33),
the semantic analysis part (118)
provides a first semantic tag (ST) (S182) indicating semantic information representing a semantic relation between a first phrase/sequence of phrases and a second phrase/sequence of phrases to a first pair made up of the first phrase/sequence of phrases corresponding to a predicate and the second phrase/sequence of phrases having a modification relation with the predicate in the text data (Din) based on the syntax data (D2), and
generates the semantic representation data (140) (S184) based on the concept tag (CT) provided for each the morpheme included in the text data (Din) and the first semantic tag (ST) provided to the first pair.

7. The semantic representation generation device (10) according to claim 6, further comprising
an ST system storage part (340) storing an ST system table (34) associating a rule for determining a second pair to which one of a plurality of second semantic tags (ST) should be provided for each of the plurality of second semantic tags (ST) indicating plural pieces of semantic information, respectively, each representing a semantic relation between a phrase/sequence of phrases and a phrase/sequence of phrases constituting a second pair, wherein
the semantic analysis part (118) provides one of the second semantic tags (ST) to the second pair based on the syntax data (D2) with reference to the ST system table (34).

8. A semantic representation generation program (31) for generating semantic representation data (140) from a natural language including a content word and a function word, wherein
the semantic representation generation program (31) makes a computer (20) execute:
a text analysis step (S122, S124, S126, S14, S16) of receiving text data (Din) described in the natural language (S10) and performing a superficial analysis including a syntax analysis on the text data (Din), thereby generating syntax data (D2) representing a structure of a sentence included in the text data (Din) (S14); and
a semantic analysis step (S18) of generating the semantic representation data (140) corresponding to the text data (Din) based on the syntax data (D2),
the computer (20) includes a CT system storage part (330) storing a CT system table (33) in which concept information hierarchically and ambiguously representing a meaning of a morpheme regarding a part of speech of the content word and a part of speech of the function word is recorded,
the text analysis step includes a concept tag providing step (S124) of providing a concept tag (CT) indicating the concept information for each the morpheme included in the text data (Din) based on the syntax data (D2) with reference to the CT system table (33), and
the semantic analysis step (S18) includes:
a semantic tag providing step (S182) of providing a first semantic tag (ST) indicating semantic information representing a semantic relation between a first phrase/sequence of phrases and a second phrase/sequence of phrases to a first pair made up of the first phrase/sequence of phrases corresponding to a predicate and the second phrase/sequence of phrases having a modification relation with the predicate in the text data (Din) based on the syntax data (D2); and
a data generation step (S184) of generating the semantic representation data (140) based on the concept tag (CT) provided for each the morpheme included in the text data (Din) and the first semantic tag (ST) provided to the first pair.

9. The semantic representation generation program (31) according to claim 8, wherein
the computer (20) further includes an ST system storage part (340) storing an ST system table (34) associating a rule for determining a second pair to which one of a plurality of second semantic tags (ST) should be provided for each of the plurality of second semantic tags (ST) indicating plural pieces of semantic information, respectively, each representing a semantic relation between a phrase/sequence of phrases and a phrase/sequence of phrases constituting a second pair, and
in the semantic analysis step (S18), one of the second semantic tags (ST) is provided to the second pair based on the syntax data (D2) with reference to the ST system table (34).
